# EUROPÄISCHE PATENTANMELDUNG

(11) **EP 0 780 417 A2**
(43) Veröffentlichungstag der Anmeldung: **25.06.1997**
(21) Anmeldenummer: 96116458.9
(22) Anmeldetag: 15.10.1996
(51) Int. Cl.: C08G 18/66, C08G 18/79, C09D 175/06

(54) **Hydroxyl- und uretdiongruppenhaltige Polyisocyanate**

(30) Priorität: 21.12.1995 DE 19547878
(71) Anmelder: HÜLS AKTIENGESELLSCHAFT, 45764 Marl (DE)
(72) Erfinder: Gras, Reiner, Dr., 44879 Bochum (DE)

(57) **Zusammenfassung**

Hydroxyl- und uretdiongruppenhaltige Polyisocyanate, im wesentlichen enthaltend
- A) 55 bis 85 Gew.-%: Uretdion,
- B) 2 bis 15 Gew.-%: Polyol mit ≥ 3 Hydroxylgruppen und/oder
- C) 5,5 bis 31 Gew.-%: Diol und/oder
- D) 7,5 bis 33 Gew.-%: Kettenverlängerer mit einer Funktionalität von ≥ 2 bis ≤ 6,
wobei die Polyisocyanate endständige Hydroxylgruppen tragen, eine Funktionalität ≥ 3 aufweisen und die Molmassen zwischen 1500 und 4400 liegen, sowie der freie Isocyanatgehalt < 0,5 Gew.-% beträgt.

## Beschreibung

Die Erfindung betrifft hydroxyl- und uretdiongruppenhaltige Polyisocyanate mit einer Funktionalität ≥ 3, ein Verfahren zu ihrer Herstellung sowie die Verwendung zur Herstellung von Polyurethan (PUR)-Kunststoffen, insbesondere von abspaltfreien PUR-Lacksystemen, ganz bevorzugt von PUR-Pulverlacksystemen und die danach hergestellten PUR-Beschichtungen.

Polyisocyanate für die Verwendung in Polyurethan-Pulverlacken, die Uretdiongruppen enthalten, sind insbesondere aus der DE-OS 30 30 554 bekannt. Derartige Polyisocyanate weisen jedoch nur zwei endständige partiell oder vollständig blockierte Isocyanatgruppen auf und sind streng linear aufgebaut. Wie aus der EP-A-254 152 (Seite 2, Spalte 1, Zeile 63 bis Satzende) zu entnehmen ist, ist diese Tatsache in der Praxis von großem Nachteil.

Auch der Lehre der EP-A-639 598 liegt die Polyadditionsreaktion von uretdiongruppenhaltigen Polvisocyanaten mit Diolen und/oder bifunktionellen Kettenverlängerern und, wie aus den Beispielen zu erkennen, Monoalkoholen zugrunde. Auch die Verwendung von isocyanuratgruppenhaltigen Polyisocyanat-Uretdionen mit mehr als zwei NCO-Funktionen führt durch die Verwendung von Monoalkoholen nicht zu höherfunktionellen Polyadditionsprodukten, den Vernetzern für PUR-Pulverlacke. Das ist aber, wie oben erwähnt, für die Lackqualität von Nachteil.

Es konnten laut DE-OS 19 505 566 überraschenderweise erstmals zur Herstellung der beanspruchten uretdiongruppenhaltigen Polyisocyanate Polyole mit mehr als zwei Hydroxylgruppen eingesetzt werden. Hierfür war es allerdings erforderlich, die Isocyanatgruppen der Polyisocyanat-Uretdione zunächst partiell zu blockieren, um das Gelieren zu vermeiden. Aus ökonomischen Gründen wurden rückpaltbare Blockierungsmittel eingesetzt. Das stellt allerdings einen ökologischen Nachteil dar.

Aufgabe der vorliegenden Erfindung war es daher, uretdiongruppenhaltige Polyisocyanate bereitzustellen, um diese Vernetzer zur Herstellung abspaltfreier PUR-Kunststoffe, insbesondere von PUR-Pulverlacken, zu verwenden sowie die danach hergestellten PUR-Pulverlackbeschichtungen, die die genannten Nachteile des Standes der Technik nicht mehr aufweisen.

Die Aufgabe wurde gemäß den Patentansprüchen gelöst.

Gegenstand der vorliegenden Erfindung sind demnach hydroxyl- und uretdiongruppenhaltige Polyisocyanate, im wesentlichen enthaltend
- A) 55 bis 85 Gew.-%: Uretdion,
- B) 2 bis 15 Gew.-%: Polyol mit ≥ 3 Hydroxylgruppen und/oder
- C) 5,5 bis 31 Gew.-%: Diol und/oder
- D) 7,5 bis 33 Gew.-%: Kettenverlängerer mit einer Funktionalität von ≥ 2 bis ≤ 6,
wobei die Polyadditionsprodukte endständig Hydroxylgruppen tragen, eine Funktionalität von drei und mehr als drei, vorzugsweise drei bis vier, aufweisen, die Molmassen zwischen 1500 und 4400, vorzugsweise zwischen 1800 und 3500 liegen, sowie der freie Isocyanatgehalt < 0,5 Gew.-% beträgt.

Weiterer Gegenstand der Erfindung ist die Verwendung der hydroxyl- und uretdiongruppenhaltigen Polyisocyanate zur Herstellung von PUR-Kunststoffen, insbesondere in Kombination mit hydroxylgruppenhaltigen Polymeren, in abspaltfreien, transparenten und pigmentierten PUR-Pulverlacken erhöhter Netzwerkdichte, sehr guter Reaktivität und ausgezeichnetem Glanz sowie abspaltfreie, transparente und pigmentierte PUR-Pulverlacke, welche die erfindungsgemäßen hydroxyl- und uretdiongruppenhaltigen Polyisocyanate mit einer Funktionalität ≥ 3 enthalten.

Die erfindungsgemäß eingesetzten Uretdione (Komponente A) werden aus Diisocyanaten nach den bekannten Methoden erhalten, und prinzipiell sind alle bekannten Diisocyanate einsetzbar.

Bevorzugte Uretdione stammen jedoch aus den Diisocyanaten, ausgewählt aus der Gruppe Hexamethylendiisocyanat (HDI), 2-Methylpentamethylendiisocyanat-1.5 (DI 51), 2.2.4(2.4.4)-Trimethylhexamethylendiisocyanat oder Isophorondiisocyanat (IPDI), wobei diese allein oder in Mischungen als Komponente A eingesetzt werden können.

Besonders bevorzugt wird das Uretdion des Isophorondiisocyanats verwendet.

Das isocyanuratfreie Uretdion des Isophorondiisocyanats ist bei Raumtemperatur hochviskos und größer als 10⁶ mPa·s, bei 60 °C liegt die Viskosität bei 13 · 10³ mPa·s und bei 80 °C bei 1,4 · 10³ mPa·s. Der freie NCO-Gehalt liegt zwischen 16,8 und 18,5 Gew.-%, d. h. daß mehr oder minder hohe Anteile an Polyuretdion des IPDI im Reaktionsprodukt vorliegen müssen. Der Monomergehalt liegt bei ≈ 1 Gew.-%. Der Gesamt-NCO-Gehalt des Reaktionsproduktes nach dem Erhitzen auf 180 - 200 °C beträgt 37,5 - 37,8 Gew.-%.

Während der Dimerisierung von aliphatischen Diisocyanaten bei an sich bekannten Verfahren und Katalysatoren bildet sich als Nebenprodukt Isocyanurat in unterschiedlichen Mengen, so daß die NCO-Funktionalität der eingesetzten isocyanurathaltigen Polyisocyanat-Uretdione > 2 bis 2,5 beträgt. Es war daher sehr überraschend, daß derartige isocyanurathaltige Polyisocyanat-Uretdione zur Synthese von hydroxyl- und uretdiongruppenhaltigen Polyisocyanaten mit einer Funktionalität ≥ 3 eingesetzt werden können, ohne daß Gelierung eintritt.

Als Polyole (Komponente B) kommen erfindungsgemäß Glycerin, Trimethylolpropan, Ditrimethylolpropan, Trimethylolethan, Hexantriol-1.2.6, Butantriol-1.2.4, Tris-(β-Hydroxyethyl)-isocyanurat, Pentaerythrit, Mannit oder Sorbit in Frage, wobei Trimethylolethan, Trimethylolpropan (TMP) und Tris-Hydroxyethylisocyanurat (THEIC) bevorzugt eingesetzt werden. Sie werden allein oder in Mischungen verwendet.

Zu den erfindungsgemäß eingesetzten Diolen (Komponente C) zählen alle die, die in der PUR-Chemie üblicherweise eingesetzt werden, besonders bevorzugt sind: Ethylenglykol (E), Triethylenglykol (TEG), Butandiol-1.4 (B), Pentandiol-1.5 (P), Hexandiol-1.6 (HD), 3-Methylpentandiol-1.5(Pm), Neopentylglykol (N), 2.2.4(2.4.4)-Trimethylhexandiol (T) sowie Hydroxypivalinsäureneopentylglykolester(Eg).

Die erfinderischen Polyisocyanate enthalten vorteilhafterweise auch Kettenverlängerer (Komponente D) mit einer Funktionalität von ≥ 2 bis ≤ 6, insbesondere ≥ 2 bis ≤ 4, in Form von linearen und verzweigten hydroxylgruppenhaltigen Polyestern mit einer Molmasse zwischen 180 und 2000, vorzugsweise zwischen 230 und 1500 sowie Hydroxylzahlen zwischen 900 und 50 mg KOH/g, vorzugsweise zwischen 700 und 100 mg KOH/g. Sie werden hergestellt z. B. durch Kondensation von Polyolen und Diolen und Dicarbonsäuren.

Bevorzugt werden als als Kettenverlängerer lineare hydroxylgruppenhaltige Polyester oder Polycaprolactone mit einer Molmasse zwischen 180 und 2000 und einer Hydroxylzahl zwischen 625 und 50 mg KOH/g eingesetzt.

Außerdem werden bevorzugt als Kettenverlängerer verzweigte Polyester oder Polycaprolactone mit einer Funktionalität ≥ 3 mit einer Molmasse zwischen 210 und 2000 und einer Hydroxylzahl zwischen 900 und 100 mg KOH/g, eingesetzt.

Zur Herstellung der Kettenverlängerer werden bevorzugt die obengenannten Polyole und/oder Diole, ergänzt durch 2-Methylpropandiol-1.3, Diethylenglykol, Dodecandiol-1.12 sowie trans- und cis-Cyclo-hexandimethanol (CHDM), eingesetzt.

Zu den bevorzugten Dicarbonsäuren zählen aliphatische, ggf. alkylverzweigt, wie Bernstein-, Adipin- (As), Kork-, Azelain- und Sebacinsäure (Sb), 2.2.4(2.4.4)-Trimethyladipinsäure; weiterhin werden auch Lactone und Hydroxycarbonsäuren wie ε-Caprolacton und Hydroxycapronsäure dazu gezählt.

Die erfinderischen hydroxylgruppenhaltigen Reaktionsprodukte - Komponenten B, C und D - werden so eingesetzt, daß die Mischungen mindestens 1 Mol von B und/oder D mit drei oder mehr OH-Gruppen im OH-Gemisch enthalten müssen.

Das erfinderische Mischungsverhältnis der hydroxylgruppenhaltigen Reaktanten mit dem Uretdion muß so gewählt werden, daß die Funktionalität der hydroxyl- und unretdiongruppenhaltigen Polyisocyanate mindestens 3 beträgt.

Die erfindungsgemäßen Polyadditionsprodukte können u. a. nach dem wie folgt beschriebenen Verfahren erhalten werden.

Die Umsetzung in Lösemittel erfolgt im allgemeinen bei Temperaturen von 50 bis 100 °C, vorzugsweise zwischen 60 und 90 °C. Die OH-Komponente, Polyol und/oder Diole und/oder Kettenverlängerer, wird vorgelegt und das Uretdion so rasch wie möglich zugesetzt, ohne daß die Reaktionstemperatur die o. g. Grenzen überschreitet. Die Umsetzung ist nach 30 bis 150 Minuten beendet. Anschließend wird das Lösemittel entfernt. Dazu geeignet sind Abdampfschnecken, Filmtruder oder auch Sprühtrockner.

Geeignete Lösemittel sind Benzol, Toluol oder andere aromatische bzw. aliphatische Kohlenwasserstoffe, Essigester wie Ethyl- oder Butylacetat, auch Ketone wie Aceton, Methylethylketon, Methylisobutylketon oder chlorierte aromatische und aliphatische Kohlenwasserstoffe sowie beliebige Gemische dieser oder anderer inerter Lösemittel.

Ein weiterer Gegenstand der Erfindung ist die lösemittelfreie und kontinuierliche Herstellung der Verfahrensprodukte mittels Intensivkneter in einem Ein- oder Mehrschneckenextruder, insbesondere in einem Zweiwellenextruder. Die lösemittelfreie Synthese erfordert Temperaturen ≥ 110 bis 190 °C. Überraschend war, daß für die Uretdion-Synthesen derart hohe Temperaturen zur Anwendung kommen können. Diese Temperaturen liegen bereits deutlich im Respaltbereich für Uretdione, so daß hohe freie Isocyanatgehalte resultieren können und damit unkontrollierte Reaktionsabläufe zu erwarten wären. Diese Tatsache war für die hydroxylgruppenhaltige Uretdion-Polyadditionsprodukt-Synthese bedeutungsvoll, und um so überraschender war es, daß sie realisiert werden konnte. Als vorteilhaft erwiesen sich dabei die kurzen Reaktionszeiten von < 5 Minuten, vorzugsweise < 3 Minuten, insbesondere < 2 Minuten.

Weiterhin von prinzipieller Natur ist, daß die kurzzeitige thermische Belastung ausreicht, um die Reaktionspartner homogen zu mischen und dabei vollständig oder weitgehend umzusetzen. Anschließend wird entsprechend der Gleichgewichtseinstellung gezielt abgekühlt und, falls erforderlich, der Umsatz vervollständigt.

Die Umsetzungsprodukte werden dem Reaktionskneter in getrennten Produktströmen zugeführt, wobei die Ausgangskomponenten bis auf 120 °C, vorzugsweise bis 90 °C, vorgewärmt werden können. Handelt es sich um mehr als zwei Produktströme, können diese auch gebündelt zudosiert werden. Polyol und/oder Diol und/oder Kettenverlängerer und/oder Katalysatoren und/oder weitere übliche Lack-Zuschlagsstoffe wie Verlaufsmittel und/oder Stabilisatoren können zu einem Produktstrom zusammengefaßt werden; ebenso die, die gegenüber Isocyanatgruppen inert sind: Katalysatoren sowie entsprechend obengenannte Lack-Zuschlagsstoffe.

Ebenfalls kann die Reihenfolge der Produktströme variabel gehandhabt werden sowie die Eintrittsstelle für die Produktströme unterschiedlich sein.

Zur Nachreaktion, Abkühlung, Zerkleinerung und Absackung werden bekannte Verfahren und Technologien verwendet.

Zur Beschleunigung der Polyadditionsreaktion können auch die in der PUR-Chemie üblichen Katalysatoren verwendet werden. Sie werden in einer Konzentration von 0,01 bis 1 Gew.-%, vorzugsweise von 0,03 bis 0,5 Gew.-%, bezogen auf die eingesetzten Reaktionskomponenten, eingesetzt. Als besonders geeignet erwiesen sich bisher Zinn-II- und -IV-Verbindungen. Genannt wird hier besonders Dibutylzinndilaurat (DBTL). Andere Katalysatoren sind jedoch nicht von vornherein als ungeeignet anzusehen.

Ein weiterer Gegenstand der vorliegenden Erfindung ist die Verwendung der hydroxyl- und uretdiongruppenhaltigen Polyisocyanate zur Herstellung von Polyurethan-Kunststoffen, insbesondere in Kombination mit hydroxylgruppenhaltigen Polymeren und/oder den in der PUR-Chemie üblichen Zuschlagsstoffen zur Herstellung von abspaltfreien, transparenten und pigmentierten PUR-Pulverlacken, die sich durch sehr gute Reaktivität auszeichnen und damit ökonomisch wie ökologisch bedeutungsvoll sind und überraschenderweise trotz gesteigerter Netzwerkdichte eine ausgezeichnete Flexibilität aufweisen.

Ein weiterer Gegenstand der vorliegenden Erfindung sind abspaltfreie PUR-Pulverlacke, bestehend aus den erfindungsgemäßen Polyisocyanaten in Kombination mit hydroxylgruppenhaltigen Polymeren. Als Reaktionspartner für PUR-Pulverlacke kommen Verbindungen in Frage, welche solche funktionellen Gruppen tragen, die sich mit Isocyanatgruppen während des Härtungsprozesses in Abhängigkeit von der Temperatur und Zeit umsetzen, z. B. Hydroxyl-, Carboxyl-, Mercapto-, Amino-, Urethan-, (Thio)Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Epoxidharze mit Hydroxylgruppen im Molekül, Aminoplaste und ihre Modifizierungsprodukte mit polyfunktionellen Alkoholen, Polyazomethine, Polyurethane, Polysulfonamide, Melaminabkömmlinge, Celluloseester und -ether, teilweise verseifte Homo- und Copolymerisate von Vinylestern, insbesondere aber Polyester und Acrylatharze.

Für die Herstellung von Polyestern bevorzugte Carbonsäuren können aliphatischer, cycloaliphatischer, aromatischer und/oder hetero-cyclischer Natur sein und gegebenenfalls durch Halogenatome substituiert und/oder ungesättigt sein. Als Beispiele hierfür seien genannt: Bernstein-, Adipin- (As), Kork-, Azelain-, Sebacin-, Phthal-, Terephthal- (TS), Isophthal- (Is), Trimellit-, Pyromellit-, Tetrachlorphthal-, Endomethylentetrahydrophthal-, Glutar-, Malein- und Fumarsäure bzw. - soweit zugänglich - deren Anhydride, Terephthalsäuredimethylester (DMT), Terephthalsäure-bis-glykolester, weiterhin cyclische Monocarbonsäuren wie Benzoesäure, p-tert.-Butylbenzoesäure oder Hexahydrobenzoesäure.

Als mehrwertige Alkohole kommen z. B. Ethylenglykol, Propylenglykol-1.2 und -1.3, Butylenglykol-1.4 und -2.3, Di-β-hydroxyethylbutandiol, Hexandiol-1.6, Octandiol-1.8, Neopentylglykol, Cyclohexandiol, 1.4-Bishydroxymethylcyclohexan, 2.2-Bis-(4-hydroxycyclohexyl)-propan, 2.2-Bis-[(β-hydroxyethoxy)-phenyl]-propan, 2-Methyl-propandiol-1.3, 3-Methylpentandiol-1.5, 2.2.4(2.4.4)-Trimethylhexandiol-1.6, Glycerin, Trimethylolpropan, Trimethylolethan, Hexantriol-1.2.6, Butantriol-1.2.4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester in Frage.

Auch Mono- und Polyester als Lactone, z. B. ε-Caprolacton oder Hydroxycarbonsäuren, z. B. Hydroxypivalinsäure, ω-Hydroxydecansäure, Ω-Hydroxycapronsäure, Thioglykolsäure, können eingesetzt werden. Polyester aus den obengenannten Polycarbonsäuren bzw. deren Derivaten und Polyphenolen, wie Hydrochinon, Bisphenol-A, 4.4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1.6 und anderen Polyolen durch übliche Kondensationsreaktionen, z. B. mit Phosgen- oder Diethyl- bzw. Diphenylcarbonat, oder aus cyclischen Carbonaten, wie Glykol- oder Vinylidencarbonat, durch Polymerisation in bekannter Weise erhältlich sind; Polyester der Kieselsäure, Polyester der Phosphorsäure, z. B. aus Methan-, Ethan-, β-Chlorethan-, Benzol- oder Styrolphosphorsäure, -phosphorsäurechlorid oder -phosphorsäureester und Polyalkoholen oder Polyphenolen der obengenannten Art; Polyester der Borsäure; Polysiloxane, wie z. B. die durch Hydrolyse von Dialkyldichlorsilanen mit Wasser und nachfolgende Behandlung mit Polyalkoholen, sowie die durch Anlagerung von Polysiloxandihydriden an Olefinen, wie Allylalkohol oder Acrylsäure, erhältlichen Produkte.

Bevorzugte Polyester sind z. B. auch die Reaktionsprodukte von Polycarbonsäuren und Glycidylverbindungen, wie sie z. B. in der DE-PS 24 10 513 beschrieben sind.

Die besonders bevorzugt eingesetzten hydroxylgruppenhaltigen Polyester haben eine OH-Funktionalität von > 2, eine OH-Zahl von 20 bis 200 mg KOH/g, vorzugsweise 30 bis 150 mg KOH/g, eine Viskosität von < 60 000 mPa·s, vorzugsweise < 40 000 mPa·s, bei 140 °C und einem Schmelzpunkt von > 70 bis ≤ 120 °C, vorzugsweise 75 bis 100 °C, aufzuweisen.

Als Dicarbonsäuren können bei diesem Verfahren sämtliche unter 2. im folgenden aufgeführte Polycarbonsäuren verwendet werden. Monocarbonsäuren, welche beispielsweise unter 3. aufgeführt sind, können ebenfalls eingesetzt werden.

Bevorzugte Komponenten sind auch monomere Ester, z. B. Dicarbonsäure-bis-(hydroxy(alkohol))ester, Monocarbonsäureester von mehr als zweiwertigen Polyolen und Oligoester, die durch Kondensationsreaktion aus in der Lackchemie üblichen Rohstoffen hergestellt werden können. Als solche sind z. B. anzusehen:
1. Alkohole mit 2 bis 24, vorzugsweise 2 bis 10 C-Atomen, und 2 bis 6 an nichtaromatischen C-Atomen gebundene OH-Gruppen, z. B. Ethylenglykol, Propylenglykol, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit;
2. Di- und Polycarbonsäuren mit 4 bis 36 C-Atomen und 2 bis 4 Carboxylgruppen sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäuren, Trimellitsäure, Pyromellithsäure, Azelainsäure;
3. Monocarbonsäuren mit 6 bis 24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosfettsäure, Sojaölfettsäure, Ricinenfettsäure, hydrierte und isomerisierte Fettsäuren, wie "Konjuvandol"-Fettsäure sowie deren Gemische, wobei die Fettsäuren auch als Glyceride einsetzbar sind und unter Umesterung und/oder Dehydratisierung umgesetzt werden können;
4. einwertige Alkohole mit 1 bis 18 C-Atomen, z. B. Methanol, Ethanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl), Bd. 14/2, 1 - 5, 21 - 23, 40 - 44, Georg Thieme Verlag, Stuttgart, 1963 oder bei C. R. Martens, Alkyd Resins, 51 - 59, Reinhold Plastics Appl. Series, Reinhold Publishing Comp., New York, 1961 beschrieben ist.

Bevorzugte Acrylatharze, welche als OH-Komponente verwendet werden können, sind Homo- oder Copolymerisate, wobei z. B. folgende Monomere als Ausgangsprodukte gewählt werden können: Ester der Acrylsäure und Methacrylsäure mit zweiwertigen, gesättigten, aliphatischen Alkoholen mit 2 bis 4 C-Atomen, wie z. B. 2-Hydroxyethylacrylat, 2-Hydroxypropylacrylat, 4-Hydroxybutylacrylat und die entsprechenden Methacrylsäureester; Acrylsäure- und Methacrylsäurealkylester mit 1 bis 18 C-Atomen in der Alkoholkomponente, wie z. B. Methylacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylsäureester; Acrylsäure- und Methacrylsäurecyclohexylester; Acrylnitril und Methacrylnitril, Acrylamid und Methacrylamid; N-Methoxymethyl(meth)acrylsäureamid.

Besonders bevorzugte Acrylatharze sind Copolymere aus
a) 0 bis 50 Gew.-% Ester der Acryl- oder Methacrylsäure mit zwei- oder mehrwertigen Alkoholen, wie Butandiol-(1.4)-monoacrylat, Hydroxypropyl (meth)acrylat; ferner Vinylglykol, Vinylthioethanol, Allylalkohol, Butandiol-1.4-monovinylether;
b) 5 bis 95 Gew.-% Ester der Acrylsäure oder Methacrylsäure mit einwertigen Alkoholen, die 1 bis 12 Kohlenstoffatome enthalten, wie z. B. Methylmethacrylat, Ethylacrylat, n-Butyl-acrylat oder 2-Ethylhexylacrylat;
c) 0 bis 50 Gew.-% aromatischer Vinylverbindungen, wie Styrol, Methylstyrol oder Vinyltoluol;
d) 0 bis 20 Gew.-% anderer Monomerer mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol(meth)acrylamid sowie Glycidyl(meth)acrylat, wobei der Anteil der Gruppe a) und/oder b) mindestens 5 Gew.-% beträgt.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbindungen, wie z. B. Dibenzoylperoxid, tert.-Butylperbenzoat oder Azodiisobutyronitril, verwendet. Das Molekulargewicht kann z. B. mit Schwefelverbindungen, wie tert.-Dodecylmercaptan, geregelt werden.

Bevorzugte Polyether können z. B. durch Polyaddition von Epoxiden, wie Ethylenoxid, Propylenoxid, Butylenoxid, Trimethylenoxid, 3.3-Bis-(chlormethyl)-oxacyclobutan, Tetrahydrofuran, Styroloxid, dem Bis-(2.5)-epoxypropylether des Diphenylolpropans oder Epichlorhydrin mit sich selbst, z. B. in Gegenwart von BF₃, oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Propylenglykol-(1.3) oder -(1.2), Pentamethylenglykol, Hexandiol, Decamethylenglykol, Trimethylolpropan, 4.4'-Dihydroxydiphenylpropan, Anilin, Ammoniak, Ethanolamin, Ethylendiamin, Di-(β-hydroxypropyl)-methylamin, Di-(β-hydroxyethyl)-anilin, Hydrazin sowie auch hydroxyalkylierten Phenolen, wie z. B. Di-(β-hydroxyethoxy)-resorcin, hergestellt werden.

Ebenso können hydroxylgruppenhaltige Polyurethane und/oder Polyharnstoffe eingesetzt werden.

Das Mischungsverhältnis der hydroxylgruppenhaltigen Polymeren und den erfindungsgemäßen Polyisocyanaten wird in der Regel so gewählt, daß auf eine OH-Gruppe 0,5 - 1,2, bevorzugt 0,8 - 1,1, ganz besonders bevorzugt 1,0 NCO-Gruppe kommt.

Die Isocyanatkomponente wird für die Herstellung von PUR-Pulverlacken mit dem geeigneten hydroxylgruppenhaltigen Polymeren und gegebenenfalls Katalysatoren sowie Pigmenten und üblichen Hilfsmitteln wie Füllstoffen und Verlaufsmitteln, z. B. Siliconöl, Acrylatharzen, gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, elektrostatisches Wirbelsintern, erfolgen. Nach dem Pulverauftrag werden die beschichteten Werkstücke zur Aushärtung 60 bis 4 Minuten auf eine Temperatur von 150 bis 220 °C, vorzugsweise 30 bis 6 Minuten bei 160 bis 200 °C, erhitzt.

Nachfolgend wird der Gegenstand der Erfindung anhand von Beispielen näher erläutert. Die verwendeten Abkürzungen sind in der Beschreibung an den entsprechenden Stellen erklärt (Seiten 3 bis 4).

### A Herstellung der erfindungsgemäßen hydroxyl- und uretdiongruppenhaltigen Polyisocyanate

### A 1 Polyol-Kettenverlängerer

### Allgemeine Herstellungsvorschrift

Die Ausgangskomponenten - vgl. Tabellen 1 und 2 - werden in einen Reaktor gegeben und mit Hilfe eines Ölbades auf ≈ 140 °C erhitzt. Nachdem die Stoffe zum größten Teil geschmolzen sind, werden 0,1 Gew.-% Di-n-butylzinnoxid als Katalysator zugesetzt. Die erste Wasserabspaltung tritt bei 150 bis 160 °C auf. Innerhalb von 2 bis 3 Stunden wird die Temperatur auf 180 bis 190 °C erhöht und die Veresterung während weiteren 8 bis 10 Stunden zu Ende gebracht. Während der gesamten Reaktionszeit wird das Sumpfprodukt gerührt und ein schwacher Stickstoffstrom durch das Reaktionsgemisch geleitet. Die Säurezahl der Polyester lag stets < 2 mg KOH/g.

### A 1.1

**Tabelle 1**

| **Polyol-Kettenverlängerer (Komponente D) - A 1.1; Funktionalität: F = 2** | | | | | | | |
|---|---|---|---|---|---|---|---|
| Beispiel A 1.1. | Ausgangskomponenten in mol | | | | | Kenndaten | |
| | As | Sb | N | P | HD | OH-Zahl [mg KOH/g] | Viskosität 25 °C [mPa·s] |
| 1 | 1 | - | 2 | - | - | 335 ± 15 | ≈ 1500 |
| 2 | - | 1 | 2 | - | - | 289 ± 10 | ≈ 1150 |
| 3 | Polycapralactone Fa. Interox-Capa 200 | | | | | 216 | Schmelzbereich 18 - 23 °C |
| 4 | Polycaprolactone Fa. Interox-Capa 210 | | | | | 112 | Schmelzbereich 30 - 40 °C |

### A 1.2

**Tabelle 2**

| **Polyol-Kettenverlängerer (Komponente D); Funktionalität: F ≥ 3** | | | | | | |
|---|---|---|---|---|---|---|
| Beispiel A 1.2. | Ausgangskomponenten in mol | | | | Kenndaten | |
| | As | N | HD | TMP | OH-Zahl [mg KOH/g] | Viskosität 25 °C [mPa·s] |
| 1 | 2 | 1 | 1 | 1 | 270 - 285 | 5500 |
| 2 | Polycaprolactone Fa. Interox-Capa 305 | | | | 305 - 320 | 1350 |
| 3 | Polycaprolactone Fa. Interox-Capa 316 | | | | 210 - 220 | 2300 |

### A 2 Hydroxyl- und uretdiongruppenhaltige Polyisocyanate

### Allgemeine Herstellungsvorschriften

### A.2.1 Aus Lösemittel

Die Polyolkomponente - vgl. Tabelle 3 - und der Katalysator (0,03 - 0,5 Gew.-% DBTL) werden, gelöst im Lösemittel, im Reaktor vorgelegt. Unter starkem Rühren und Inertgasatmosphäre wird die berechnete Menge Uretdion, gelöst im Lösemittel, so schnell zugesetzt, daß die Reaktionstemperatur 100 °C nicht übersteigt. Die Umsetzung wird mittels titrimetrischer NCO-Bestimmung kontrolliert und ist nach 1 bis 3 Stunden beendet. Danach wird das Lösemittel entfernt, das Produkt abgekühlt und ggf. zerkleinert.

### A 2.2 Lösemittelfrei

In die Einzugsgehäuse eines Doppelschneckenextruders wurde das Uretdion mit einer Temperatur von 60 bis 110 °C eingespeist, wobei gleichzeitig die Polyolkomponente - vgl. Tabelle 3 - mit einer Temperatur von 25 bis 110 °C zudosiert wurde. Das Uretdion bzw. die Polyolkomponente enthielt ggf. die erforderliche Katalysatormenge - 0,03 bis 0,5 Gew.-% DBTL -, bezogen auf das Endprodukt.

Der eingesetzte Extruder setzt sich aus zehn Gehäusen zusammen, davon fünf Heizzonen. Die Temperaturen der Heizzonen unterliegen einem großen Bereich - zwischen 50 und 190 °C - und können einzeln gesteuert werden. Alle Temperaturen sind Soll-Temperaturen, die Regelung in den Gehäusen erfolgt durch elektrische Heizung und pneumatische Kühlung. Das Düsenelement wird mittels Ölthermostat beheizt. Die Drehzahl der Doppelschnecke, aufgebaut mit Förderelementen, lag zwischen 50 und 380 Upm.

Das Reaktionsprodukt, das von 10 bis 130 kg/h anfällt, wird entweder abgekühlt, anschließend zerkleinert oder formiert und abgesackt oder bereits die Schmelze formiert, abgekühlt und abgesackt.

Die physikalischen und chemischen Kenndaten der erfinderischen Verfahrensprodukte sowie die molaren Zusammensetzungen sind in den Tabellen 3 bis 5 zusammengefaßt.

Die nach bekannten Verfahren hergestellten Uretdione hatten folgende Kenndaten:

### IPDI-Uretdion

- NCO-frei:: 16,8 bis 18,5 Gew.-%
- NCO-gesamt:: 37,4 bis 37,8 Gew.-%

### DI 51-Uretdion

- NCO-frei:: 20,1 bis 21,2 Gew.-%
- NCO-gesamt:: 43,7 bis 44,9 Gew.-%

### HDI-Uretdion (DESMODUR® N 3400)

- NCO-frei:: 20,9 bis 22,1 Gew.-%
- NCO-gesamt:: 35,6 bis 36,5 Gew.-%

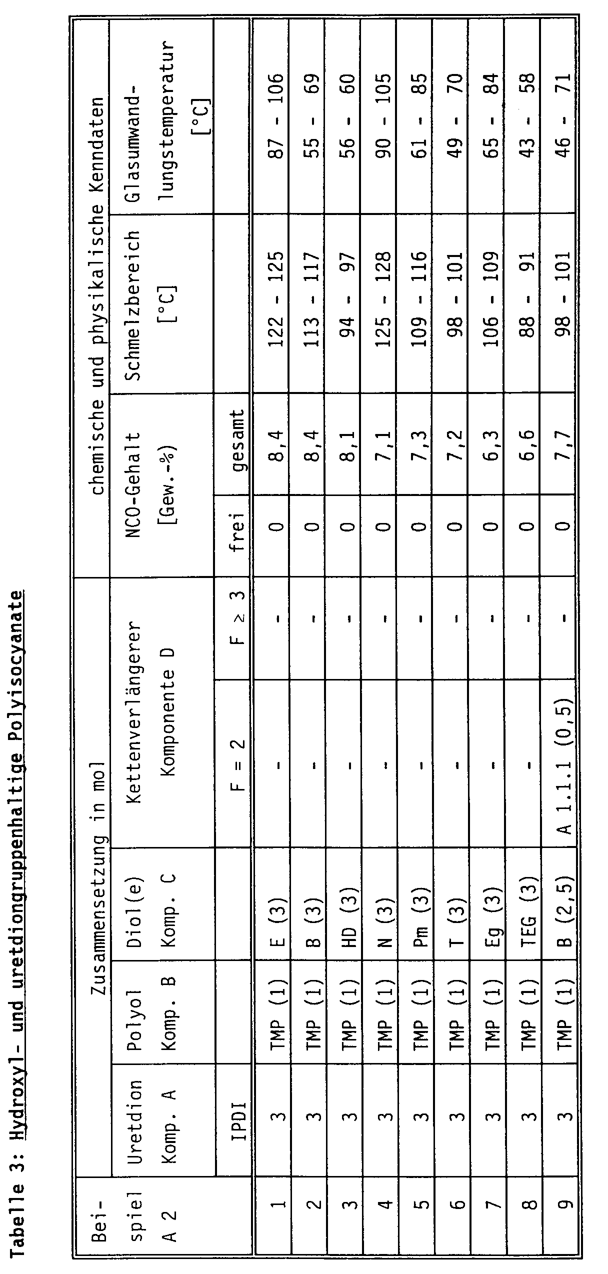

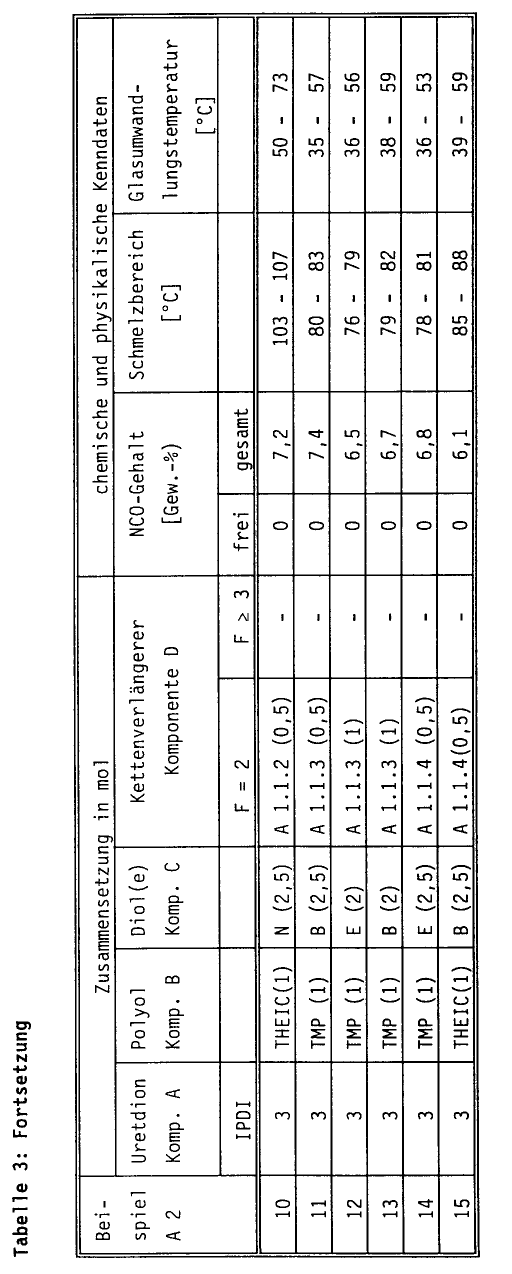

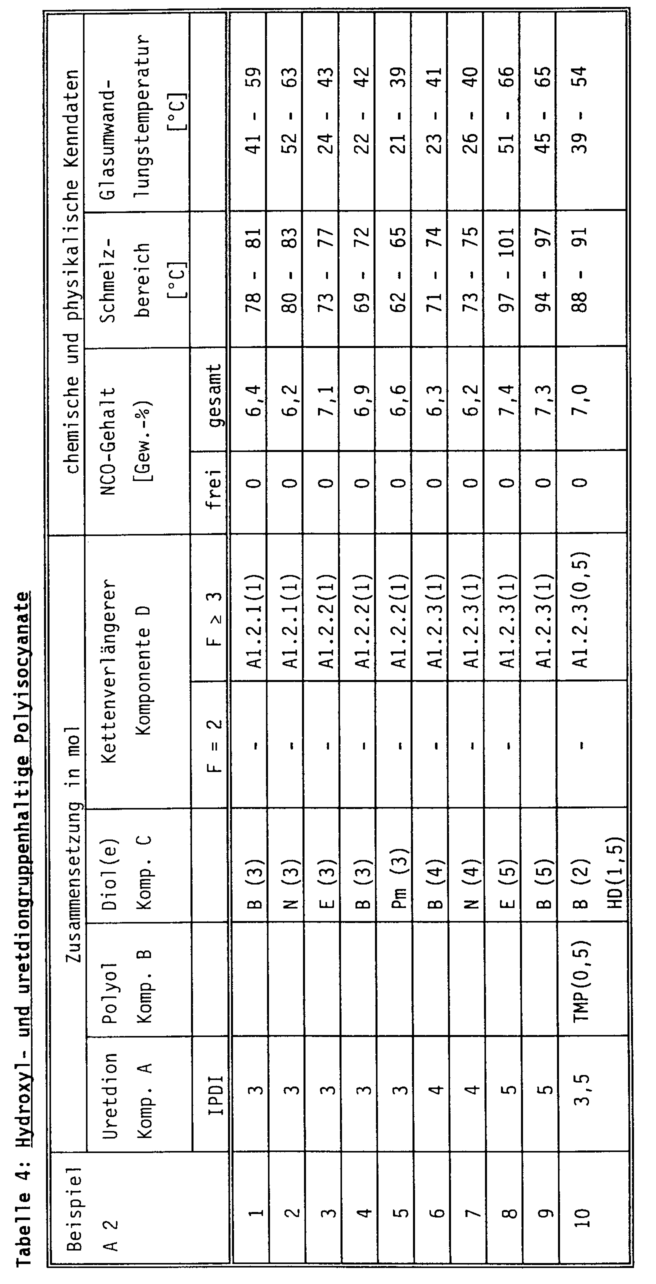

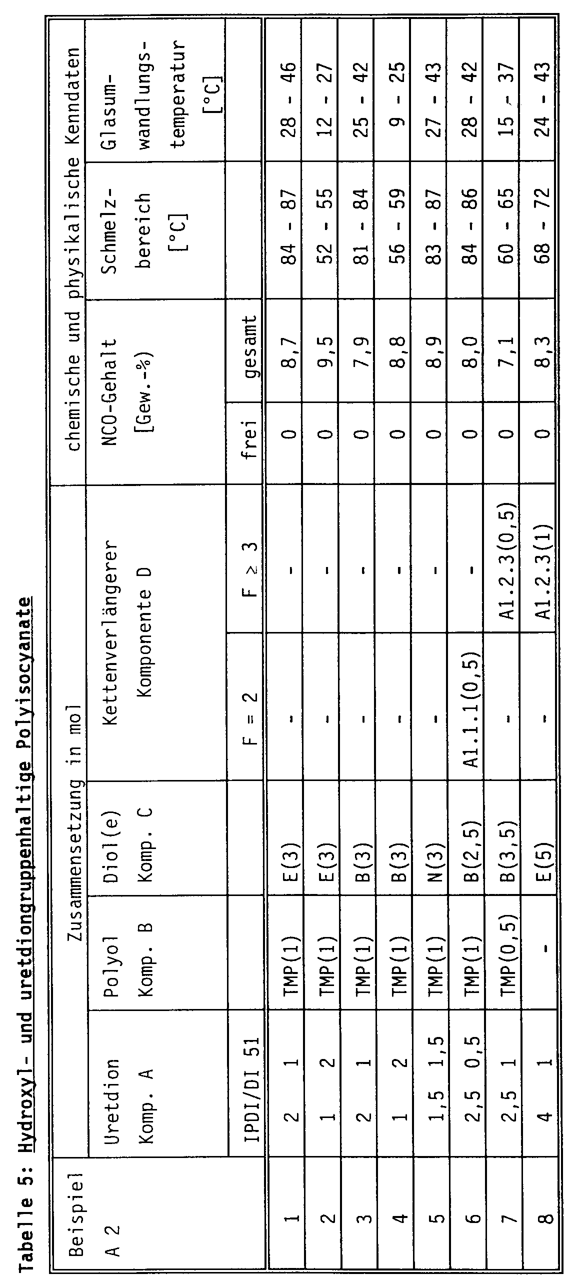

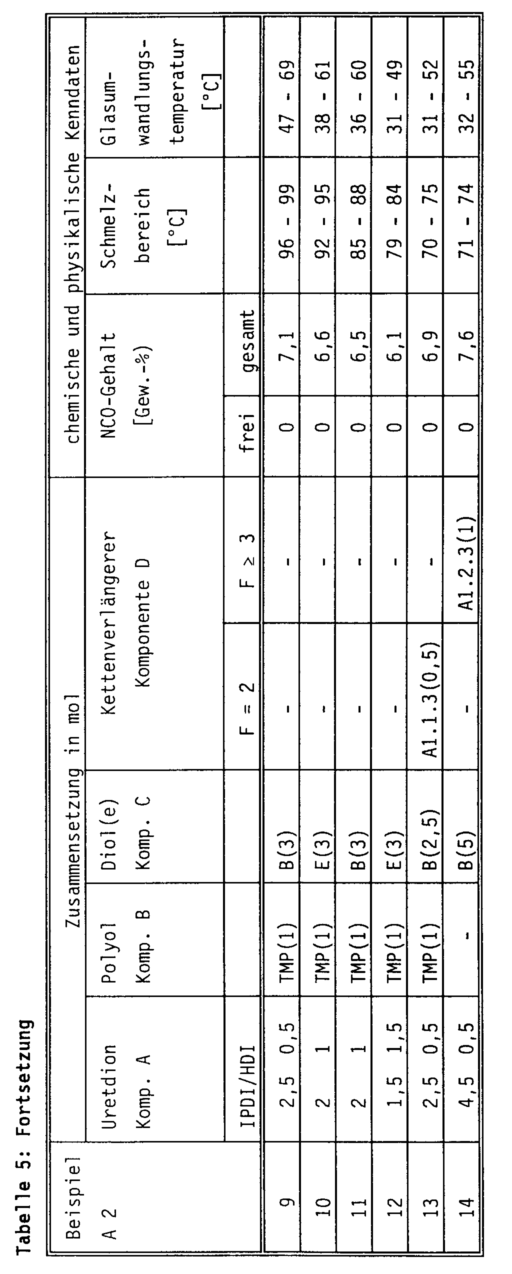

### B Polyester

Die folgende Tabelle 6 enthält Beispiele über die zur Formulierung von PUR-Pulverlacken am Markt erhältlichen Polyester.

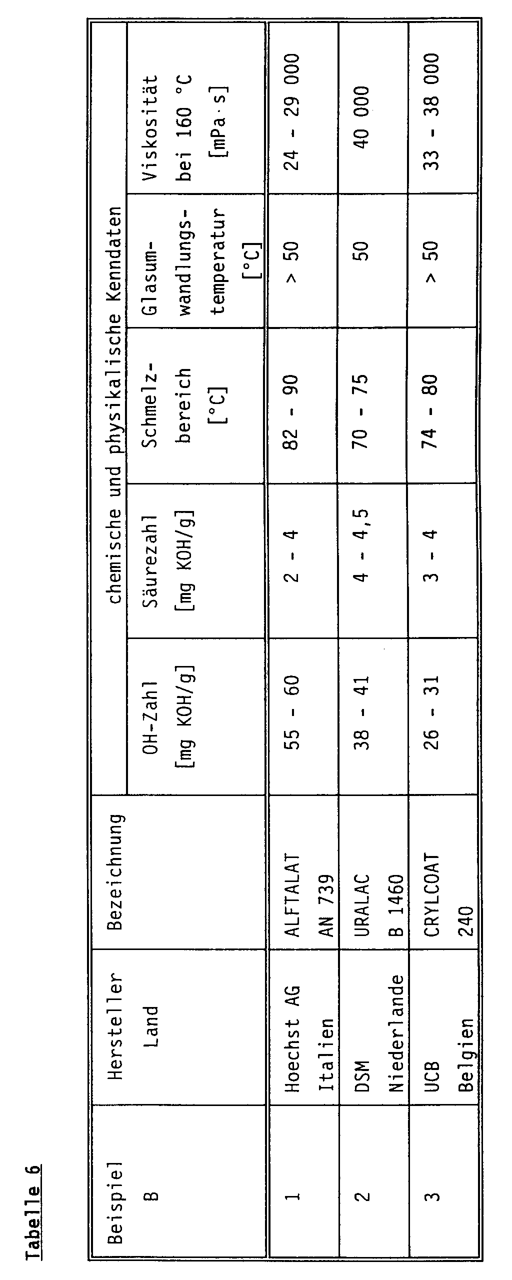

### C Polyurethan-Pulverlacke

### Allgemeine Herstellungsvorschrift

Die zerkleinerten Produkte - uretdiongruppenhaltige Polyisocyanate (Vernetzer) , Polyester, Verlaufsmittel-, ggf. Katalysator-Masterbatch - werden ggf. mit dem Weißpigment in einem Kollergang innig vermischt und anschließend im Extruder bis maximal 130 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, ggf. vorbehandelte, Eisenbleche appliziert und in einem Umlufttrockenschrank bei Temperaturen zwischen 160 und 200 °C eingebrannt.

### Verlaufsmittel-Masterbatch

Es werden 10 Gew.-% des Verlaufsmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gew.-% des Katalysators - DBTL - in dem entsprechenden Polyester in der Schmelze homogenisiert und nach dem Erstarren zerkleinert.

Die Abkürzungen in den folgenden Tabellen bedeuten:
- SD: = Schichtdicke in µm
- ET: = Tiefung nach Erichsen in mm (DIN 53 156)
- GS: = Gitterschnittprüfung (DIN 53 151)
- GG 60 °∢: = Messung des Glanzes nach Gardner (ASTM-D 5233)
- Imp. rev.: = Impact reverse in g·m
- HK: = Härte nach König in sec (DIN 53 157)

### C 1 Pigmentierte Pulverlacke

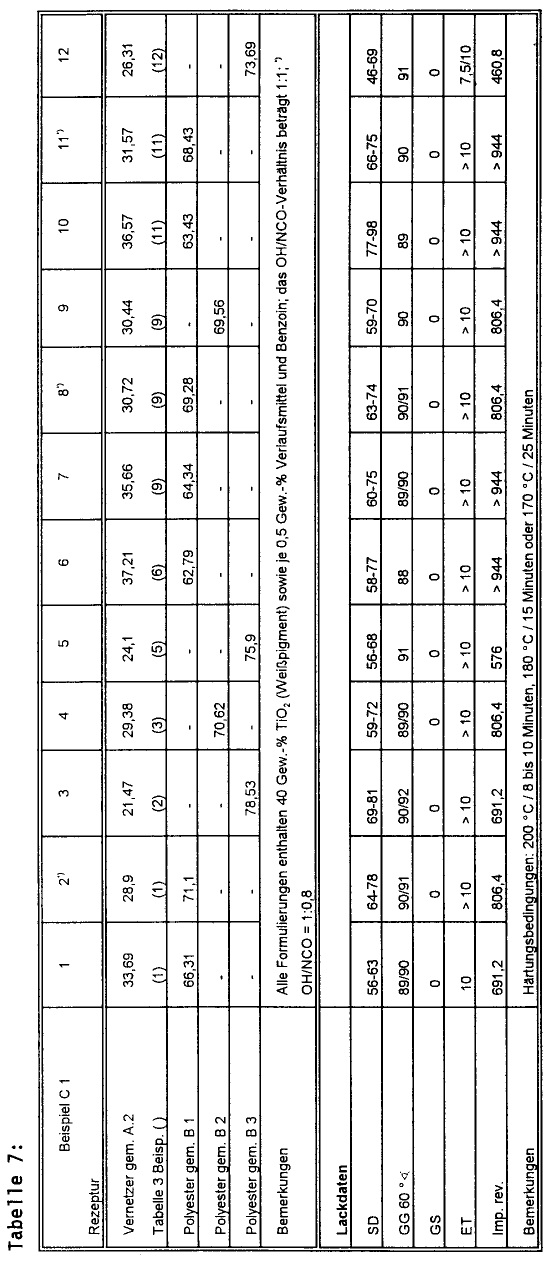

### C 1 Pigmentierte Pulverlacke

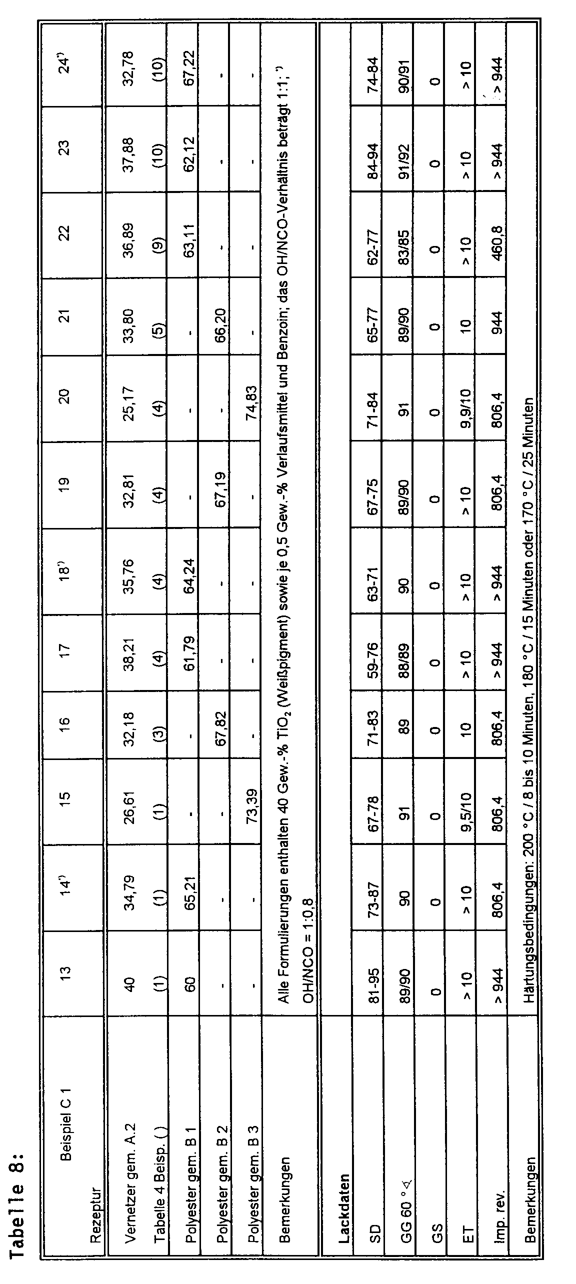

### C 1 Pigmentierte Pulverlacke

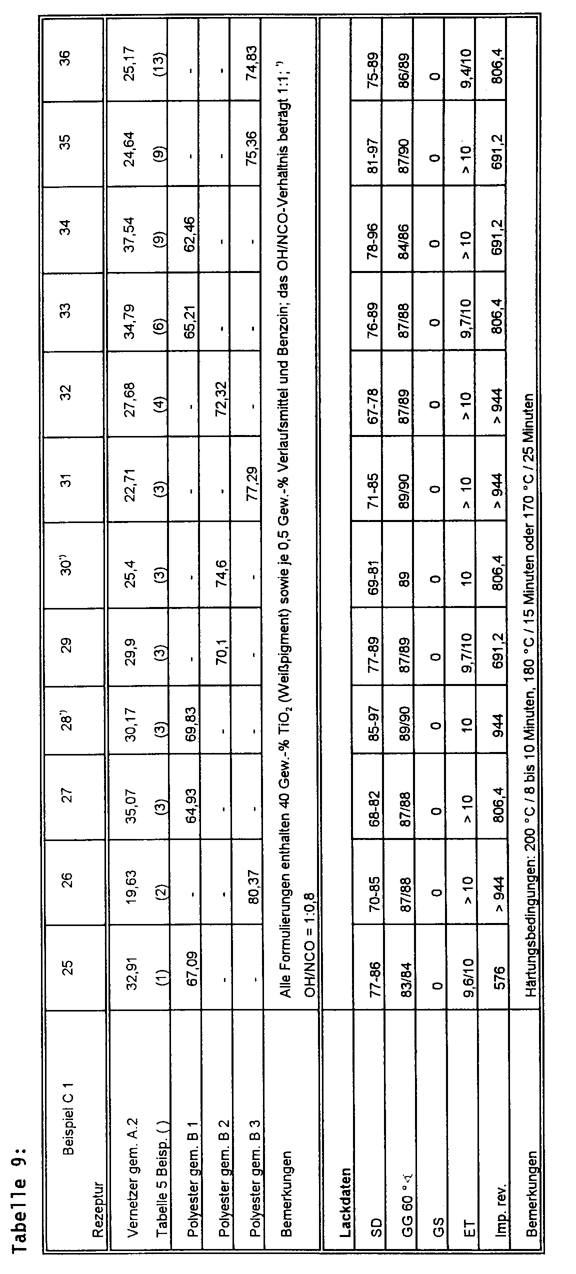

### C 2 Transparente Pulverlacke

Nach dem beschriebenen Verfahren wurden auch die transparenten Pulverlacke hergestellt, appliziert und zwischen 200 und 170 °C eingebrannt.

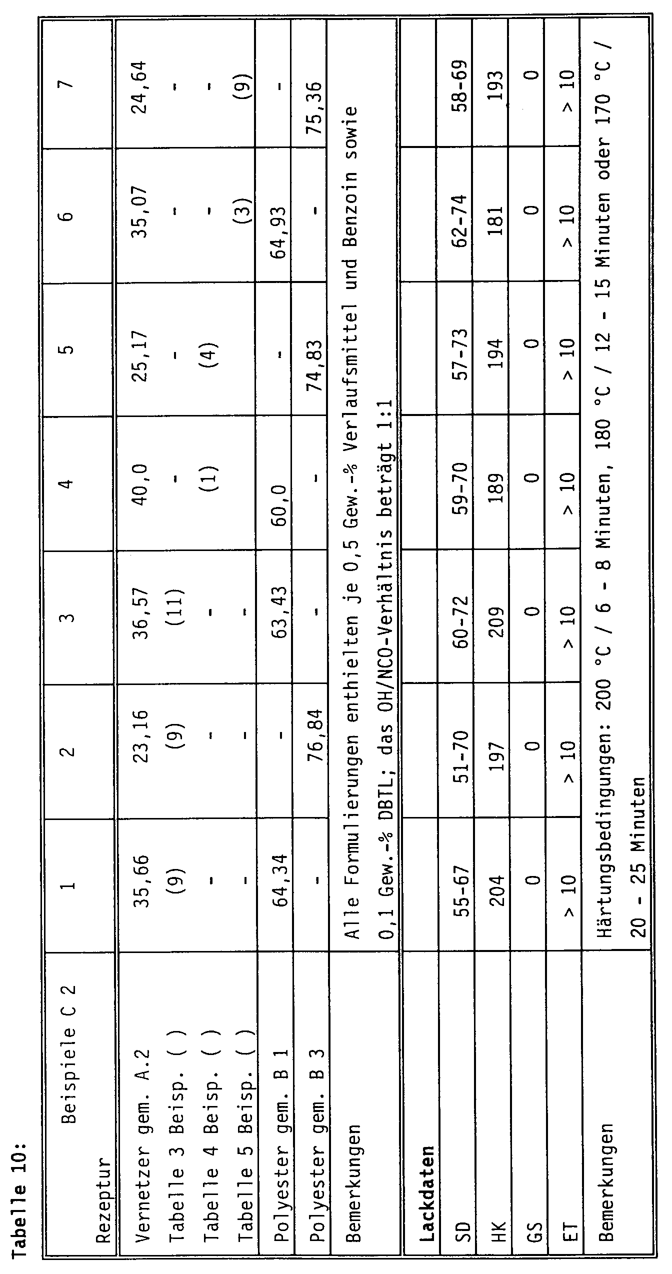

## Patentansprüche

1. Hydroxyl- und uretdiongruppenhaltige Polyisocyanate, im wesentlichen enthaltend
A) 55 bis 85 Gew.-% Uretdion,
B) 2 bis 15 Gew.-% Polyol mit ≥ 3 Hydroxylgruppen und/oder
C) 5,5 bis 31 Gew.-% Diol und/oder
D) 7,5 bis 33 Gew.-% Kettenverlängerer mit einer Funktionalität von ≥ 2 bis ≤ 6,
wobei die Polyisocyanate endständige Hydroxylgruppen tragen, eine Funktionalität ≥ 3 aufweisen und die Molmassen zwischen 1500 und 4400 liegen, sowie der freie Isocyanatgehalt < 0,5 Gew.-% beträgt.

2. Hydroxyl- und uretdiongruppenhaltige Polyisocyanate nach Anspruch 1,
dadurch gekennzeichnet,
daß sie eine Funktionalität von 3 bis 4 und Molmassen zwischen 1800 bis 3500 aufweisen.

3. Hydroxyl- und uretdiongruppenhaltige Polyisocyanate nach den Ansprüchen 1 oder 2,
dadurch gekennzeichnet,
daß Uretdione der Diisocyanate Hexamethylendiisocyanat-1.6, 2-Methylpentamethylendiisocyanat-1.5, 2.2.4(2.4.4)-Trimethylhexamethylendiisocyanat oder Isophorondiisocyanat allein oder in Mischungen eingesetzt werden.

4. Hydroxyl- und uretdiongruppenhaltige Polyisocyanate nach den Ansprüchen 1 bis 3,
dadurch gekennzeichnet,
daß als Polyol Glycerin, Trimethylolpropan, Ditrimethylolpropan, Trimethylolethan, Hexantriol-1.2.6, Butantriol-1.2.4, Tris-(β-Hydroxyethyl)-isocyanurat, Pentaerythrit, Mannit oder Sorbit in Frage kommen, wobei Trimethylolethan, Trimethylolpropan (TMP) und Tris-Hydroxyethylisocyanurat (THEIC) allein oder in Mischungen eingesetzt werden.

5. Hydroxyl- und uretdiongruppenhaltige Polyisocyanate nach den Ansprüchen 1 bis 4,
dadurch gekennzeichnet,
daß als Diole Ethylenglykol, Triethylenglykol, Butandiol-1.4, Pentandiol-1.5, Hexandiol-1.6, 3-Methyl-pentandiol-1.5, Neopentylglykol, 2.2.4(2.4.4)-Trimethylhexandiol (Isomerengemisch) sowie Hydroxypivalinsäureneopentylglykolester allein oder in Mischungen eingesetzt werden.

6. Hydroxyl- und uretdiongruppenhaltige Polyisocyanate nach den Ansprüchen 1 bis 5,
dadurch gekennzeichnet,
daß als Kettenverlängerer lineare hydroxylgruppenhaltige Polyester oder Polycaprolactone mit einer Molmasse zwischen 180 und 2000 und einer Hydroxylzahl zwischen 625 und 50 mg KOH/g eingesetzt werden.

7. Hydroxyl- und uretdiongruppenhaltige Polyadditionsprodukte nach Anspruch 6,
dadurch gekennzeichnet,
daß die linearen, hydroxylgruppenhaltigen Polyester oder Polycaprolactone aufgebaut sind aus mindestens je einem Monomeren, ausgewählt aus Ethylenglykol, Butandiol-1.4, Pentandiol-1.5, Hexandiol-1.6, 3-Methylpentandiol-1.5, 2.2.4(2.4.4)-Trimethylhexandiol, Hydroxypivalinsäureneopentylglykolester, 2-Methylpropandiol, 2.2-Dimethylpropandiol, Diethylenglykol, Dodecandiol-1.12, trans- und cis-Cyclohexandimethanol und mindestens je einem Monomeren, ausgewählt aus Bernstein-, Adipin-, Kork-, Azelain-, Sebacinsäure, 2.2.4(2.4.4)-Trimethyladipinsäure (Isomerengemisch), ε-Caprolacton und Hydroxycapronsäure.

8. Hydroxyl- und uretdiongruppenhaltige Polyisocyanate nach mindestens einem der Ansprüche 1 bis 7,
dadurch gekennzeichnet,
daß als Kettenverlängerer verzweigte Polyester oder Polycaprolactone mit einer Funktionalität ≥ 3, mit einer Molmasse zwischen 210 und 2000 und einer Hydroxylzahl zwischen 900 und 100 mg KOH/g, eingesetzt werden.

9. Hydroxyl- und uretdiongruppenhaltige Polyisocyanate nach Anspruch 8,
dadurch gekennzeichnet,
daß die Kettenverlängerer neben der herkömmlichen Carbonsäure, Hydroxycarbonsäure oder Lacton mindestens ein Mol Polyol, ausgewählt aus der Gruppe Trimethylolethan, Trimethylolpropan, Trishydroxyethylisocyanurat oder Pentaerythrit, enthalten.

10. Hydroxyl- und uretdiongruppenhaltige Polyisocyanate nach den Ansprüchen 8 und 9,
dadurch gekennzeichnet,
daß Kettenverlängerer auf Basis von ε-Caprolacton und/oder Hydroxycapronsäure bevorzugt eingesetzt werden.

11. Hydroxyl- und uretdiongruppenhaltige Polyisocyanate nach den Ansprüchen 1 bis 10,
dadurch gekennzeichnet, daß Kettenverlängerer mit einer Funktionalität von ≥ 2 bis ≤ 4 eingesetzt werden.

12. Verfahren zur Herstellung von hydroxyl- und uretdiongruppenhaltigen Polyisocyanaten nach den Ansprüchen 1 bis 11,
dadurch gekennzeichnet,
daß die hydroxylgruppenhaltigen Reaktanten B, C und D als Mischungen eingesetzt werden, wobei mindestens ein Mol von B und/oder des Kettenverlängerers D mit mehr als zwei Hydroxylgruppen in der Mischung enthalten sein muß.

13. Verfahren nach Anspruch 12,
dadurch gekennzeichnet,
daß die Umsetzung der Ausgangsprodukte in Lösemitteln bei 50 bis 100 °C erfolgt und diese nach erfolgter Reaktion entfernt werden.

14. Verfahren nach Anspruch 12,
dadurch gekennzeichnet,
daß die Umsetzung der Ausgangsprodukte lösemittelfrei im Intensivkneter bei Temperaturen von 110 bis 190 °C erfolgt.

15. Verfahren nach Anspruch 14,
dadurch gekennzeichnet,
daß die Umsetzung im Zweiwellenextruder erfolgt.

16. Verfahren nach den Ansprüchen 12 bis 15,
dadurch gekennzeichnet,
daß zur Umsetzung Katalysatoren in einer Konzentration von 0,01 bis 1 Gew.-%, bezogen auf die eingesetzten Ausgangsstoffe, eingesetzt werden.

17. Verfahren nach den Ansprüchen 12 bis 16,
dadurch gekennzeichnet,
daß als Katalysator organische Zinnverbindungen eingesetzt werden.

18. Verfahren nach den Ansprüchen 12 bis 17,
dadurch gekennzeichnet,
daß 0,03 bis 0,5 Gew.-% Katalysatoren eingesetzt werden.

19. Verwendung der hydroxyl- und uretdiongruppenhaltigen Polyisocyanate gemäß den Ansprüchen 1 bis 11 in Kombination mit hydroxylgruppenhaltigen Polymeren zur Herstellung von abspaltfreien transparenten und pigmentierten Polyurethan-Pulverlacken hoher Netzwerkdichte.

20. Abspaltfreie transparente und pigmentierte Polyurethan-Pulverlacke,
dadurch gekennzeichnet,
daß sie blockierungsmittelfreie, hydroxyl- und uretdiongruppenhaltige Polyisocyanate mit einer Funktionalität ≥ 3 gemäß den Ansprüchen 1 bis 11 in Kombination mit hydroxylgruppenhaltigen Polymeren sowie weiteren Zuschlags- und Hilfsstoffen enthalten.

21. Polyurethan-Pulverlacke nach Anspruch 20,
dadurch gekennzeichnet,
daß ein OH/NCO-Verhältnis von 1:0,5 bis 1,2, vorzugsweise 1:0,8 bis 1,1, und insbesondere 1:1 zugrunde liegt.

22. Polyurethan-Pulverlacke nach den Ansprüchen 20 bis 21,
dadurch gekennzeichnet,
daß den PUR-Pulverlacken Katalysatoren zugesetzt werden in einer Konzentration von 0,03 bis 0,5 Gew.-% unter Einbeziehung der bereits enthaltenen Katalysatormenge aus den hydroxyl- und uretdiongruppenhaltigen Polyisocyanaten.

23. Polyurethan-Pulverlacke nach den Ansprüchen 20 bis 22,
dadurch gekennzeichnet,
daß den PUR-Pulverlacken organische Zinnverbindungen als Katalysatoren zugesetzt werden.

24. Polyurethan-Pulverlacke nach den Ansprüchen 20 bis 23,
dadurch gekennzeichnet,
daß bei den PUR-Pulverlacken 0,05 bis 0,15 Gew.-% Katalysatoren eingesetzt werden.

25. Polyurethan-Pulverlacke nach den Ansprüchen 20 bis 24,
dadurch gekennzeichnet,
daß als hydroxylgruppenhaltige Polymere Polyester mit einer Funktionalität > 2, einer OH-Zahl von 20 bis 200 mg KOH/g, einer Viskosität < 60 000 mPa·s bei 160 °C und einem Schmelzpunkt ≥ 70 °C und ≤ 120 °C, eingesetzt werden.

26. Polyurethan-Pulverlacke nach den Ansprüchen 20 bis 25,
dadurch gekennzeichnet,
daß als hydroxylgruppenhaltige Polymere Polyester mit einer Funktionalität > 2, einer OH-Zahl von 30 bis 150 mg KOH/g, einer Viskosität < 40 000 mPa·s bei 160 °C und einem Schmelzpunkt von 75 bis 100 °C eingesetzt werden.
